# EUROPEAN PATENT SPECIFICATION

(11) **EP 2 776 510 B1**
(45) Date of publication and mention of the grant of the patent: **28.12.2016**
(21) Application number: 12795156.4
(22) Date of filing: 05.11.2012
(51) Int. Cl.: C08L 77/06

(54) **HYDROLYTIC RESISTANT POLYAMIDE COMPOSITIONS COMPRISING POLYHYDROXY POLYMERS**
HYDROLYTISCHE BESTÄNDIGE POLYAMIDZUSAMMENSETZUNGEN MIT POLYHYDROXYPOLYMEREN
COMPOSITIONS DE POLYAMIDE AYANT UNE RÉSISTANCE À L'HYDROLYSE COMPRENANT DES POLYMÈRES POLYHYDROXYLÉS

(30) Priority: 08.11.2011 US 201161557015 P
(43) Date of publication of application: 17.09.2014
(73) Proprietor: E. I. du Pont de Nemours and Company, Wilmington, DE 19898 (US)
(72) Inventor: DOSHI, Shailesh Ratilal, Kingston, Ontario K7P 1S5 (CA); TOPOULOS, Georgios, CH-1217 Meyrin (CH)
(74) Representative: Morf, Jan Stefan
(86) International application number: PCT/US2012/063570
(87) International publication number: WO 2013/070551

(56) References cited:
- WO-A1-2005/042639

## Description

### FIELD OF THE INVENTION

The present invention relates to the field of polyamide compositions having improved long-term hydrolytic stability.

### BACKGROUND OF INVENTION

Polyamides possess desirable chemical resistance, processability and heat resistance properties. These properties make them particularly well suited for demanding high performance automotive and electrical/electronics applications. There is a current and general desire in the automotive field to have high temperature resistant polymers for use in automotive hoses, pipes, and tubes which are exposed to high temperature fluids. When plastic parts comprising polyamides are exposed to high temperature aqueous solutions for a prolonged period of time, such as in automotive hoses, mechanical properties generally tend to decrease due to hydrolysis of the polymer.

In such high temperature applications, fillers such as glass fibers are typically used in an attempt to improve the temperature range that these polyamides can be exposed to.

However, there are many applications where polyamides comprising glass fibers are undesirable such as radiator and air conditioning (A/C) hoses. In these applications, there is a need for the polyamide to be flexible so that the hose can be bent or formed into specific shapes as needed. In applications in which the hose is used to transport aqueous or hydroxyl containing materials such as automotive antifreeze solutions, it is advantageous for the polyamide to have excellent hydrolytic stability at elevated temperatures.

US Pat. No. 5,455,292 discloses the use of a phosphoric acid ester compound to improve the hydrolytic stability of polyamide compositions. These ester compounds are used in the range of from 1 to 200 parts by weight based on 100 parts by weight of the polyamide resin component.

European Patent No. 0411601B1 discloses blends of polyolefins such as polyethylene with polyamide/polyvinyl alcohol mixtures and alkylcarboxyl-substituted polyolefins for laminates used in the fabrication of bottles.

European Patent application 1687376 A1 discloses a method for molding an article using a mixture of a polyamide, a polyvinyl alcohol, and a softener wherein the components of the mixture are added to an extruder without mixing them beforehand.

U.S. Pat. App. Pub. No. 20110028621A1 discloses a thermoplastic composition comprising a polyamide polymer, 0.25 to 20 weight percent of a polyhydric polymer selected from ethlene/vinyl alcohol copolymer and poly(vinyl alcohol), from 0 to 3 weight percent of a co-stabilizer, and from 0 to 60 weight percent of a reinforcing agent.

U.S. Pat. App. Pub. No. 20100029821A1 discloses a thermoplastic composition comprising a polyamide polymer, 0.1 to 10 weight percent of a polyhydric alcohol, from 0.1 to 3 weight percent of a co-stabilizer, from 10 to 60 weight percent of a reinforcing agent, and from 0 to 50 weight percent of a polymeric toughener.

U.S. Pat. App. Pub. No. 20100029815A1 discloses a molded article comprising a polyamide resin, 0.25 to 20 weight percent of a polyhydric polymer selected from ethylene/vinyl alcohol copolymer and poly(vinyl alcohol), from 0 to 3 weight percent of a co-stabilizer, from 10 to 60 weight percent of a reinforcing agent, and from 0 to 20 weight percent of a polymeric toughener.

There remains a need for polyamide compositions, free of reinforcing fillers, which exhibit high temperature hydrolytic stability for use in the manufacture of hoses and pipes for transport of high temperature aqueous fluids.

### SUMMARY OF THE INVENTION

There is disclosed herein:
A thermoplastic composition comprising:
   A) 65 to 85 weight percent of an aliphatic polyamide selected from poly(hexamethylene dodecanediamide), poly(hexamethylene tetradecanediamide), poly(hexamethylene hexadecanediamide), or any combination thereof;
   B) 15 to 35 weight percent of a polyhydroxy polymer selected from ethylene/vinyl alcohol copolymer, poly(vinyl alcohol), or a combination thereof, said polyhydroxy polymer having a melt index of from 0.5 to 30 gms/10 min;
   wherein the elongation at break of the thermoplastic composition after exposure to a 50/50 water/ethylene glycol mixture at 130°C for 1000 hrs. is at least 300 percent greater than the elongation at break of the same thermoplastic composition in the absence of component (B); and
   wherein weight percent is based on the sum of component (A) and (B).

There is also disclosed herein a thermoplastic composition comprising:
A) 75 to 95 weight percent of a mixture of :
   i) greater than 0 to 50 weight percent of an aliphatic polyamide selected from poly(hexamethylene dodecanediamide), poly(hexamethylene tetradecanediamide), poly(hexamethylene hexadecanediamide), or any combination thereof; and
   ii) 50 to 100 weight percent of a semi-aromatic copolyamide selected from poly(hexamethylene dodecanediamide/hexamethylene terephthalamide), poly(hexamethylene tetradecanediamide/hexamethylene terephthalamide), poly(hexamethylene hexadecanediamide/hexamethylene terephthalamide), or any combination thereof;
   wherein the semi-aromatic copolyamide has a molar ratio of aliphatic repeat unit:semi-aromatic repeat unit of from 50:50 to 80:20; and
B) 5 to 25 weight percent of a polyhydroxy polymer selected from ethylene/vinyl alcohol copolymer, poly(vinyl alcohol), or a combination thereof, said polyhydroxy polymer having having a MI of from 0.5 to 30 gms/10 min; wherein the elongation at break of the thermoplastic composition after exposure to a 50/50 water/ethylene glycol mixture at 130C for 1000 hrs. is at least 300 percent greater than the elongation at break of the same thermoplastic composition in the absence of component (B); and
   wherein weight percent is based on the sum of component (A) and (B).

Additionally disclosed herein is a thermoplastic composition comprising a blend of:
A) 75 to 95 weight percent of a semi-aromatic copolyamide selected from poly(hexamethylene dodecanediamide/hexamethylene terephthalamide), poly(hexamethylene tetradecanediamide/hexamethylene terephthalamide), poly(hexamethylene hexadecanediamide/hexamethylene terephthalamide), or any combination thereof;
   wherein the semi-aromatic copolyamide has a molar ratio of aliphatic repeat unit:semi-aromatic repeat unit of from 50:50 to 80:20; and
B) 5 to 25 weight percent of a polyhydroxy polymer selected from ethylene/vinyl alcohol copolymer, poly(vinyl alcohol), or a combination thereof, said polyhydroxy polymer having having a MI of from 0.5 to 30 gms/10 min; wherein the elongation at break of the thermoplastic composition after exposure to a 50/50 water/ethylene glycol mixture at 130C for 1000 hrs. is at least 300 percent greater than the elongation at break of the same thermoplastic composition in the absence of component (B); and
   wherein weight percent is based on the sum of component (A) and (B).

The thermoplastic compositions may additionally comprise from greater than zero to 25 weight percent of one or more polymers selected from ionomeric polymers, acid or anhydride grafted ethylene polymers, alpha olefin homopolymers or copolymers, or any combination thereof. Also disclosed are hoses and pipes comprising these thermoplastic compositions.

### DETAILED DESCRIPTION OF THE INVENTION

### Definitions

As used throughout the specification, the phrases "about" and "at or about" are intended to mean that the amount or value in question may be the value designated or some other value about the same. The phrase is intended to convey that similar values promote equivalent results or effects according to the invention.

As used herein, the term "elongation at break" refers to the elongation of a polymer measured according to ISO 527-2/5A/1 or ASTM D638.

As used herein, the term "exposure" means a Thermoplastic composition which is completely immersed in a 50/50 weight ratio of water/ethylene glycol solution, heated for a specified number of hours, removed from the solution, and tested for the desired physical property.

As used herein, the term "repeat unit" refers to the product or structural unit resulting from the reaction of one diacid molecule and one diamine molecule. Reaction of one diacid molecule with one diamine molecule provides a repeat unit. For example, reaction of one dodecanedioic acid (C12) molecule with one hexamethylene diamine molecule (C6) creates a repeat unit of poly(hexamethylene dodecaneamide) wherein the repeat unit in this example may be represented by "612".

As used herein, the term "melt index" or (MI) refers to the melt flow rate of a polymer measured by ISO 1133 or ASTM D1238 at 210°C and with 2.16 kg weight (210°C / 2.16 kg). Calculating MI by either of these methods by one of skill in the art would achieve the recited MI in the claim.

As used herein, the term "hydroxyl content" refers to the mole percent of hydroxyl group (-OH) containing monomers which comprise the polyhydroxy alcohol. For example, ethylene vinyl alcohol (EvOH) is prepared from ethylene monomer and vinyl alcohol monomer. The hydroxyl content of EvOH is the mole percent of vinyl alcohol monomers in the EvOH polymer. The remaining mole percent is from ethylene monomers.

The term "molar ratio" refers to the ratio of the number of moles of aliphatic repeat units to the number of moles of semi-aromatic repeat units. An aliphatic repeat unit is derived from the reaction of one aliphatic diamine molecule and one aliphatic diacid molecule. A semi-aromatic repeat unit is derived from the reaction of one aliphatic diamine molecule and one diacid molecule comprising one or more aromatic groups.

### Overview

It has been discovered that the addition of polyhydroxy polymers to polyamides greatly improves the high temperature hydrolytic stability of these polyamides. Surprisingly, the polyhydroxy polymers appear to improve the high temperature hydrolytic stability only of very specific polyamides. The improvement in hydrolytic stability can be indirectly assessed by measuring the elongation at break of the thermoplastic compositions comprising the polyamide(s) and polyhydroxyl polymer(s) after exposure to an aqueous ethylene glycol solution at elevated temperature. The elongation at break of the thermoplastic compositions of the invention is at least 300 percent greater than the elongation at break of the same thermoplastic composition in the absence of the polyhydroxyl polymer after 1000 hrs. exposure to a 50/50 mixture of water/ethylene glycol at 130°C.

### Polyamides

The thermoplastic compositions of the present invention comprise specific polyamides. Polyamides are condensation products of one or more dicarboxylic acids and one or more diamines, and/or one or more aminocarboxylic acids, and/or ring-opening polymerization products of one or more cyclic lactams such as caprolactam and laurolactam as repeat units.

Polyamides useful in the thermoplastic compositions of the present invention are formed from dodecanedioic acid (C12), tetradecanedioic acid (C14), hexadecanedioic acid (C16), and/or terephthalic acid (T) in various combinations with hexamethylene diamine (C6). Specifically, the polyamides useful in the invention are selected from poly(hexamethylene dodecanediamide) (PA612), poly(hexamethylene tetradecanediamide) (PA614), poly(hexamethylene hexadecanediamide) (PA616), poly(hexamethylene dodecanediamide / hexamethylene terephthalamide) (PA612/6T), poly(hexamethylene tetradecanediamide/hexamethylene terephthalamide) (PA614/6T), poly(hexamethylene hexadecanediamide/hexamethylene terephthalamide) (PA616/6T), or any combination of these polyamides. Poly(hexamethylene dodecanediamide) (PA612), poly(hexamethylene tetradecanediamide) (PA614), and poly(hexamethylene hexadecanediamide) (PA616) are aliphatic polyamides.

When the thermoplastic composition comprises an aliphatic polyamide and a polyhydroxy polymer, the amount of aliphatic polyamide is from 65 to 90 weight percent, preferably from 70 to 85 weight percent, more preferably from 75 to 82 weight percent based on the total weight percent of polyamide and polyhydroxy polymer.

Semi-aromatic copolyamides PA612/6T, PA614/6T, and PA616/6T of the invention have a repeat unit ratio of aliphatic repeat unit:semi-aromatic repeat unit of from 50:50 to 90:10, preferably from 60:40 to 80:20, and more preferably from 60:40 to 75:25. Aliphatic repeat units include hexamethylene diamine/dodecanedioic acid (612), hexamethylene diamine/tetradecanedioic acid (614), and hexamethylene diamine/hexadecanedioic acid (616). A semi-aromatic repeat unit is hexamethylene diamine/terephthalate acid (6T).

When blends of aliphatic polyamides and semi-aromatic copolyamides are used as the polyamide component of the thermoplastic composition of the invention, the weight ratio of aliphatic polyamide(s) (i.e. PA612, PA614, and PA616) to semi-aromatic copolyamide(s) is from 50:50 weight percent to 0:100 weight percent, preferably 45:55 weight percent to 10:90 weight percent, more preferably from 40:60 weight percent to 20:80 weight percent. The blends may comprise more than one aliphatic polyamide.

The polyamides of the invention have a melting point of from 170°C to 240°C.

When naming polyamides comprising a diamine and diacid, the diamine is designated first. For example, for PA612, the "6" refers to hexamethylene diamine, and the "12" refers to dodecanedioic acid. Polyhydroxy Polymer

The polyhydroxy polymer of the invention is selected from the group consisting of ethylene/vinyl alcohol copolymers and poly(vinyl alcohol) polymers. The polyhydroxy polymers of the invention have a melt index (MI) of from 0.2 to 30 gms/10 min. as determined by ISO 1133 or ASTM D1238. Preferably the polyhydroxy polymer has a MI of 0.5 to 20 gms/10 min., more preferably 0.8 to 15 gms/10 min.

When the polyhydroxy polymer is an ethylene/vinyl alcohol copolymer (EvOH), the EvOH may have a vinyl alcohol monomer content of 10 to 90 mol %, preferably from 30 to 80 mol %, more preferably from 40 to 75 mol %, wherein the remainder mol % is ethylene monomer. Nonlimiting examples of suitable EvOH useful for the thermoplastic compositions of the invention are Soarnol® A or D copolymers available from Nippon Gosei (Tokyo, Japan) and EVAL® copolymers available from Kuraray, Tokyo, Japan.

The poly(vinyl alcohol) polymers (PvOH) suitable for use in the invention have a MI of from 0.2 to 30 gms/10 min. Preferably the polyhydroxy polymer has a MI of 0.5 to 20 gms/10 min., more preferably 0.8 to 15 gms/10 min. PvOH comprises 100 mol % vinyl alcohol monomer.

Nonlimiting examples of suitable PvOH are Mowiol® brand resins available from Kuraray Europe Gmbh.

When the polyamide of the thermoplastic composition comprises only aliphatic polyamide(s), the thermoplastic compositions of the invention may comprise from 15 to 35 weight percent, preferably 18 to 35 weight percent of polyhydroxy polymer based on the total weight percent of the aliphatic polyamide and polyhydroxy polymer.

When the polyamide component of the thermoplastic composition comprises only semi-aromatic copolyamide or a blend of at least 50 weight percent semi-aromatic copolyamide with an aliphatic polyamide as the polyamide component of the thermoplastic composition, the weight percent of semi-aromatic copolyamide or blend of a semi-aromatic copolyamide with an aliphatic polyamide is from 75 to 95 weight percent, preferably from 80 to 95 weight percent, more preferably from 85 to
95 weight percent of the thermoplastic composition based on the total weight percent of polyamide component and polyhydroxy polymer. In other words, when the polyamide is a semi-aromatic copolyamide or a blend a semi-aromatic copolyamide and up to 50 weight percent aliphatic polyamide, the thermoplastic compositions of the invention may comprise from 5 to 25 weight percent, preferably 5 to 20 weight percent, more preferably from 5 to 15 weight percent polyhydroxy polymer based on the total weight percent of polyamide and polyhydroxy polymer.

### Additional Additives

The thermoplastic compositions of the invention may include a polymeric toughener. Examples of polymeric tougheners include ionomeric polymers and grafted olefin polymers.

Ionomeric polymers are thermoplastic resins that contain metal ions in addition to the organic backbone of the polymer. Ionomers are ionic copolymers formed from an olefin such as ethylene and α,β-unsaturated C₃-C₈ carboxylic acid, such as for example acrylic acid (AA), methacrylic acid (MAA) or maleic acid monoethylester (MAME), wherein at least some of the carboxylic acid moieties in the copolymer are neutralized to form the corresponding carboxylate salts. Preferably, 5 to 99.9 % of the acid moieties of the acid copolymer are nominally neutralized by neutralizing agents chosen among alkali metals like lithium, sodium or potassium; transition metals like manganese or zinc and mixtures thereof. Ionomers may optionally comprise softening comonomers selected from alkyl acrylate and alkyl methacrylate wherein the alkyl groups have from one to eight carbon atoms. Overall, ionomers can be described as E/X/Y copolymers where E is an olefin such as ethylene, X is a α,β-unsaturated C₃-C₈ carboxylic acid, and Y is a softening comonomer, wherein X is from 2 wt-% to
30 wt-% of the E/X/Y copolymer and Y can be present in an amount of from 0 to 40 wt-% of the E/X/Y copolymer, wherein the carboxylic acid functionalities are at least partially neutralized. Suitable ionomers for use in the present invention are commercially available under the trademark Surlyn^{®} from E. I. du Pont de Nemours and Company, Wilmington, Delaware.

Grafted olefin polymers which may be added to the thermoplastic compositions of the invention can be obtained by grafting onto an olefin polymer at least one ethylenically unsaturated carboxylic acid or anhydride monomer and derivatives thereof. The ethylenically unsaturated carboxylic acid or anhydride monomer is at least one monomer selected from ethylenically unsaturated carboxylic acids and ethylenically unsaturated carboxylic acid anhydrides, including, less preferably, derivatives of such acids, and mixtures thereof. Examples of the acids and anhydrides, which may be mono-, di- or polycarboxylic acids, include acrylic acid, methacrylic acid, maleic acid, fumaric acid, itaconic acid, crotonic acid, itaconic anhydride, maleic anhydride, and substituted maleic anhydride, e.g. dimethyl maleic anhydride or citraconic anhydride, nadic anhydride, nadic methyl anhydride, and tetrahydrophthalic anhydride, maleic anhydride being particularly preferred. Examples of the derivatives of the unsaturated acids are salts, amides, imides and esters e.g. mono- and disodium maleate, acrylamide, maleimide, glycidyl methacrylate and dimethyl fumarate. Techniques for the grafting of such monomers onto the olefin polymer are known. Examples of these techniques are described in U.S. Patent 4,612,155 and in published European patent application No. 0369604. The present invention will be particularly described herein with reference to maleic anhydride as the grafting monomer used to make the grafted olefin polymer.

The olefin polymer which may be grafted includes polyethylene, polypropylene, polybutene, as well as ethylene alpha olefin copolymers such as ethylene /propylene (EP), ethylene-butene, ethylene-4methyl-1-pentene, and ethylene-octene copolymers. Olefin polymers also include substantially linear ethylene polymers (metallocene based polymers) prepared by constrained geometry catalysis as described in US Patents 5,272,236 and US 5,278,272. The grafted olefin polymer may be further functionalized by reactions with, for example, an alcohol or an amine compound. Examples of substantially linear ethylene polymers that meet the aforementioned criteria include, for example, ENGAGE™ polyolefin elastomers and other olefin polymers produced via constrained geometry catalysis by The Dow Chemical Company.

The concentration of ethylenically unsaturated carboxylic acid or anhydride monomer which may be grafted onto the olefin polymer is from a minimum of 0.01 wt%, preferably from 0.05 wt%, to a maximum of 10wt%, preferably 5wt%, and most preferably 2wt% based on the combined weight of the olefin polymer and the unsaturated carboxylic acid or anhydride compound. One example of grafted olefin polymers include FUSABOND ® resins from E. I. du Pont de Nemours and Company, Wilmington, Delaware.

In the present invention, the Thermoplastic composition may also comprise other additives commonly used in the art, such as heat stabilizers, antioxidants, antistatic agents, blowing agents, lubricants, plasticizers, colorants, and pigments.

Preferred embodiments of the thermoplastic composition have no reinforcement agent. Reinforcement agents include any inorganic material that, in its presence, increases the tensile strength of the thermoplastic composition by 10 % or more; as compared to a composition absent the inorganic material. Reinforcement agents include effective amounts of calcium carbonate, glass fibers with circular cross-section, glass fibers with noncircular cross-section, glass flakes, glass beads, carbon fibers, talc, mica, wollastonite, calcined clay, kaolin, diatomite, magnesium sulfate, magnesium silicate, barium sulfate, titanium dioxide, sodium aluminum carbonate, barium ferrite, potassium titanate and mixtures thereof.

Examples of heat stabilizers include hindered phenol antioxidants, amine antioxidants and phosphorus-based antioxidants. For polyamide compositions, three types of heat stabilizers are conventionally used to retain the mechanical properties of the composition upon exposure to high temperatures. One is the use of phenolic antioxidants optionally combined with a phosphorus based synergist, the use of aromatic amines optionally combined with a phosphorus based synergist and the third one is the use of copper salts and derivatives.

The polyamides of the present invention may be prepared by any means known to those skilled in the art, such as in a batch process using, for example, an autoclave or using a continuous process. Additives such as lubricants, antifoaming agents, and end-capping agents may be added to the polymerization mixture. The concentration of amine ends can be controlled in the preparation of the polyamide by adjusting the solution pH to control reaction stoichiometry; and controlling the amount of diamine lost in the polymerization process. Amine ends may also be adjusted by addition of end capping agents as is well known in the art. A common end capping agent is acetic acid.

The thermoplastic composition of the invention may be obtained by melt-blending the polyamide and polyhydroxyl polymer, in which all polymeric ingredients are adequately mixed, and all non-polymeric ingredients are adequately dispersed in the thermoplastic composition. Any melt-blending method may be used for mixing polymeric ingredients and non-polymeric ingredients of the present invention. For example, polymeric ingredients and non-polymeric ingredients may be fed into a melt mixer, such as a single screw or twin screw extruder, agitator, single screw or twin screw kneader, or Banbury mixer. Addition of the polymeric ingredients and non-polymeric ingredients may be by addition of all ingredients at once or gradual addition in batches. When the polymeric ingredients and non-polymeric ingredients are gradually added in batches, part of the polymeric ingredients and/or non-polymeric ingredients are first added and melt-mixed, and then the remaining polymeric ingredients and non-polymeric ingredients are subsequently added to the already melted ingredients until an adequately mixed composition is obtained.

The thermoplastic compositions of the invention are useful in increasing high temperature hydrolytic stability of molded or extruded articles made therefrom. High temperature hydrolytic stability can be assessed by exposure of tensile bars made from thermoplastic compositions to a 50/50 mixture of water/ethylene glycol at 130°C for 1000 hours. Tensile bars were prepared according to ISO 527-2/5A/1 or ASTM D638. After exposure to a 50/50 mixture of water/ethylene glycol for 1000 hours at 130°C, elongation at break of the tensile bars was measured according to ISO 527-2/5A/1 or ASTM D638. Control thermoplastic compositions were also tested both before and after exposure to a 50/50 mixture of water/ethylene glycol for 1000 hours at 130°C. The control compositions were identical to the inventive thermoplastic compositions but did not comprise polyhydroxy polymer. Test results are shown in Tables 1 to 3.

As shown in Tables 1-3, a polyhydroxyl polymer was added to various polyamides including PA610/6T, PA612/6T, PA612, PA1010, PA 66/6T, and blends of PA612 and PA612/6T to make thermoplastic compositions. These compositions are represented by examples E1-E4 and comparative examples C2, C5, C7-C9, C11-C12, C14, and C16. These thermoplastic compositions were exposed to a 50/50 water/ethylene glycol mixture at 130°C for 500 and 1000 hrs. and subsequently tested for elongation at break, and the elongation to break values compared to the identical thermoplastic composition which did not comprise a polyhydroxy polymer but which were also exposed to the 50/50 water/ethylene glycol mixture at 130°C for 500 and 1000 hrs. The thermoplastic compositions which did not contain a polyhydroxy polymer are represented by comparative examples C1, C3, C4, C6, C10, C13, C15, and C17. Also, as a baseline measurement, all examples and comparative examples were tested for elongation at break before exposure to a 50/50 water/ethylene glycol mixture at 130°C (zero hours).

As Tables 1-3 show, only thermoplastic compositions comprising polyamide PA612, PA612/6T, or blends of PA612 and PA612/6T with a polyhydroxy polymer exhibited elongation at break of at least 300 percent greater than the elongation at break of the identical thermoplastic composition which did not comprise polyhydroxyl polymer.

The thermoplastic compositions disclosed herein may have application in the manufacture of hoses, tubes, and pipes which transport high temperature aqueous and coolant solutions. Examples of molded or extruded thermoplastic articles that may be made from the thermoplastic compositions of the invention include, but not limited to, hoses and pipes for use in internal combustion engines. Examples include radiator and coolant hoses for automobiles, buses, trains, boats, farm equipment such as tractors and grain harvesters, portable and fixed generators, trucks, and on and off road construction equipment.

The hoses and pipes comprising the thermoplastic compositions of the invention can be made by any technique used by one of skill in the art. Examples of manufacturing methods include extrusion, injection, thermoforming or compression molding, and blow molding. Preferably, articles are prepared by extrusion processes.

The present invention is further illustrated by the following examples. It should be understood that the following examples are for illustration purposes only, and are not used to limit the present invention thereto.

### EXAMPLES

The following materials were used for preparing the thermoplastic compositions according to the examples (E) and comparative examples (C):
PA610/6T (poly(hexamethylene decanediamide/hexamethylene terephthalamide)) = a semi-aromatic copolyamide having a molar ratio of 610:6T repeat units of 80:20, a mp of 200°C and an intrinsic viscosity of 1.2.
PA612/6T (poly(hexamethylene dodecanediamide/hexamethylene terephthalamide)) - a semi-aromatic polyamide having a molar ratio of 612:6T repeat units of 75:25, a mp of 200°C and an intrinsic viscosity of 1.2.
PA612 - aliphatic polyamide prepared from dodecanedioic acid and 1,6-hexamethylenediamine and having a mp of 218°C and a density of 1.06 g/cm3, commercially available from E.I. DuPont de Nemours and Company, Wilmington, Delaware, USA
PA1010 (poly(decamethylene decanediamide)) - an aliphatic polyamide prepared from sebacic acid and decamethylene diamine and having a mp of 200°C and an intrinsic viscosity of 1.0.
PA66/6T a semi-aromatic polyamide having a molar ratio of 66:6T repeat units of 75:25 and having a mp of 255°C.
EVAL E105B - an ethylene vinyl alcohol copolymer that has about 56 mol % vinyl alcohol repeat units available from Kuraray Co., Ltd of Japan.
EVAL F171 - an ethylene vinyl alcohol copolymer that has about 68 mol % vinyl alcohol repeat units available from Kuraray Co., Ltd of Japan. Surlyn 9320 is an ethylene/acid/acrylate terpolymer in which some of the acid groups have been partially neutralized with zinc
Ions, commercially available from E.I. DuPont de Nemours and Company, Wilmington, Delaware, USA
Elvaloy EP4934-4 is an (ethylene/glycidyl methacrylate copolymer) available from E.I. DuPont de Nemours and Company, Wilmington, Delaware, USA.
ENGAGE 8180 - a lower density, high performance ethylene-octene copolymer having a density of 0.863 g/cm3 (ASTM D792) and a melt flow rate of 0.50 (190°C/ 2.16 kg), commercially available from The Dow Chemical Company, Midland, MI, USA.
Naugard® 445 hindered amine refers to 4,4' di(.α,α-dimethylbenzyl)diphenylamine available commercially from Uniroyal Chemical Company, Middlebury, Conn.
Heat Stabilizer HS 7:1:3.75 - a mixture of 7 parts of potassium iodide and 1 part of copper iodide in 3.75 parts of a stearate wax binder. Heat Stabilizer HS 7:1:1 - a mixture of 7 parts of potassium iodide and 1 part of copper iodide in 1 part of a stearate wax binder.
Fusabond N493 - is a maleic anhydride grafted ethylene-octene copolymer with a density of 0.87 g/cm3 and MI of 1.6 g/10 min (190 C/2.16 kg), commercially available from E.I. DuPont de Nemours and Company, Wilmington, Delaware, USA.
50/50 water/ethylene glycol mixture A - a 50:50 wt% ethylene glycol and water mixture used for Examples and Comparative Examples of Tables 1 and 2. Ethylene glycol used is available from Merck Chemicals, Darmstadt, Germany.
50/50 water/ethylene glycol mixture B - an automotive coolant test fluid used for Examples and Comparative Examples of Table 3 was a premixed Toyota long life coolant based on 50:50 mixture of ethylene glycol and water, available from Toyota Motor Company.

### Thermoplastic Composition Preparation

Examples and Comparative Examples were prepared by melt blending the ingredients listed in Tables 1 and 2 using a 40 mm twin screw extruder the ingredients listed in Tables 1 and 2 using a 40 mm twin screw extruder (Berstorff ZE40) operating at about 230°C - 250°C using a screw speed of about 300 rpm, a throughput of 100 kg/hour and a melt temperature of about 280°C. Tensile bars were molded at a mold temperature of about 90°C.

Examples and Comparative Examples in Table 3 were prepared by melt blending the ingredients in a 25 mm W & P co-rotating twin screw extruder (ZSK 25, Coperion) at a temperature of about 265 C. The blended compositions were then molded into tensile bars using a Nissei injection molding machine operating at about 230-240°C barrel temperature and a mold temperature of about 75 to 90°C. Ingredient quantities shown in the Tables are given in weight percent on the basis of the total weight of the thermoplastic composition.

Tensile bars were molded per ASTM D638 type IV geometry for compositions in Table 3 and according to ISO 527-2/5A/1 for Tables 1 and 2.

### High Temperature Hydrolysis Testing

An autoclave with 4 L capacity was used to conduct high temperature hydrolysis testing. The autoclave comprised an immersion heater and a temperature control system. The autoclave was filled with either ethylene glycol/water mixture A or B. Tensile bars to be tested were fully or completely immersed into the coolant solution. The autoclave was closed and the coolant solution heated to 130°C resulting in an internal pressure of about 2 bars. After a set time period, the autoclave was cooled to room temperature (about 20°C), the pressure released, and a set of tensile bars withdrawn for tensile testing. The autoclave was then closed and repressurized by heating to 130°C to continue high temperature hydrolysis testing of the remaining tensile bars in the autoclave. This process was repeated until the final time period was reached. During testing, it was ensured that the tensile bars were aged at 130°C for the designated time period. This time period did not include the time needed for heat up and cool-down of the solution.

### Elongation at Break

Elongation at Break (EI) was measured according to ISO 527-2/5A/1 for results in Tables 1 and 2 and according to ASTM D638 (crosshead speed of 50 mm/min.) for results in Table 3. Measurements were made on injection molded tensile bars both before exposure (zero hours) to the 50/50 water/ethylene glycol mixture and after exposure for 500 and 1000 hrs. in the 50/50 water/ethylene glycol mixture at 130°C. The control tensile bars (C1, C3, C4, C6, C10, C13, C14, and C16) did not comprise polyhydroxyl polymer but were subjected to the same test conditions (130°C for 1000 hrs. in 50/50 water/ethylene glycol mixture) as the examples and other comparative examples of the invention which contained polyhydroxyl polymer.

### Examples E1-E2 and C1-C5

Thermoplastic compositions of Examples E1-E2 and Comparative Examples C1-C5 are listed in Table 1. Example E1 comprises PA612/6T, ethylene vinyl alcohol (EvOH), and an ionomer (Surlyn). Comparative Example C3 is the same composition as E1 but without EvOH. Example E2 comprises PA612, EvOH, and ionomer. C4 is the same composition as E2 but without EvOH. Comparative Example C1 comprises PA1010 without EvOH and C2 comprises PA1010 with EvOH. Comparative Example C5 is a blend of PA66/6T, EvOH, and ionomer. Included in other ingredients listed in Tables 1 and 2 are an antioxidant and a hindered amine light stabilizer (HALS). Typical examples of antioxidants include Irganox and Irgafos antioxidants. Typical examples of HALS include Chimassorb® and Tinuvin® products available from Ciba Inc. The specific antioxidant or HALS compound can be easily chosen by one of skill in the art. These compositions were tested before exposure to 50/50 water/ethylene glycol mixture A at 130°C (zero hours) and after exposure to 50/50 water/ethylene glycol mixture A at 130°C for 500 hours and 1000 hours.

The use of EvOH in PA1010 does not improve elongation at break by at least 300%. The use of EvOH in PA66/6T causes a decrease in elongation at break after 500 hours exposure of about 60% and after 1000 hours the sample had degraded to the point that elongation at break could not be measured. However, when EvOH is mixed with PA612/6T (E1) or PA612 (E2) the improvement in elongation at break is 1179% and 318% respectively. Elongation at break values provide an indirect measurement of the hydrolytic stability of the Thermoplastic compositions. The greater or larger the elongation at break values relative to the control the better the hydrolytic stability of the Thermoplastic composition.

**Table 1**

| Example | C-1 | C-2 | C-3 | E1 | C4 | E2 | C5 |
|---|---|---|---|---|---|---|---|
| PA612/6T | | | 76.7 | 61.7 | | | |
| PA612 | | | | | 76.7 | 61.7 | |
| PA1010 | 76.7 | 61.7 | | | | | |
| PA66/6T | | | | | | | 61.7 |
| EVADE 105B | | 15 | | 15 | | 15 | 15 |
| Surlyn 9320 | 16 | 16 | 16 | 16 | 16 | 16 | 16 |
| Elvaloy EP4934-4 | 4 | 4 | 4 | 4 | 4 | 4 | 4 |
| COLLOIDS PE48/93 | 2 | 2 | 2 | 2 | 2 | 2 | 2 |
| Other Ingredient | 0.9 | 0.8 | 0.9 | 0.8 | 0.9 | 0.8 | 0.8 |
| Naugard 445 | | 0.5 | | 0.5 | | 0.5 | 0.5 |
| HS 7:1:3.75 | 0.4 | | 0.4 | | 0.4 | | |

| **Physical Properties** | | | | | | | |
|---|---|---|---|---|---|---|---|
| EI (%) 0 h | 206 | 218 | 297 | 261 | 289 | 314 | 115 |
| EI (%) 500 h | 72 | 160 | 212 | 261 | 35 | 134 | 54 |
| EI (%) 1000 h | 78 | 188 | 12 | 138 | 5.6 | 17.8 | n.m. |
| Improvement EI over Control at 1000 h (%) | N/A | 242 | N/A | 1179 | N/A | 318 | N/A |
| EvOH wt/EVOH + Polyamide wt X 100 % | N/A | 20 | N/A | 20 | N/A | 20 | 20 |

| | | | | | | | |
|---|---|---|---|---|---|---|---|
| TS = tensile strength; EI = elongation to break; h=hours; N/A = not applicable; n.m.=not measured | | | | | | | |

### Example E3 and C6 - C14

Thermoplastic compositions of Example E3 and Comparative Example C6-C14 are listed in Table 2. Example E3 comprises PA612, EvOH, and an ionomer. Comparative Example C13 is the same composition as E3 but without EvOH. Comparative Example C14 is the same composition as E3 but with only 13 wt% EvOH. C7-C9 comprise PA1010, EvOH, and ionomer. C6 is the same composition as C7 - C9 but without EvOH. C11-C12 comprise PA610/6T, EvOH, and ionomer. C10 is the same composition as C11-C12 but without EvOH. These compositions were tested before exposure to 50/50 water/ethylene glycol mixture A at 130°C (zero hours) and after exposure to 50/50 water/ethylene glycol mixture A at 1300°C for 500 hours and 1000 hours.

The use of EvOH in PA1010 and in PA610/6T did not improve elongation at break by at least 300 percent relative to the same thermoplastic composition in the absence of EvOH after 1000 hours exposure to a 50/50 water/ethylene glycol mixture at 130°C.

However, when EvOH is mixed at different concentrations with PA612 (E3 and C14), the improvement in elongation at break is 467 percent and 75 percent respectively. The concentration of EvOH in C14 is only 13 weight percent based on the weight percent of the polyamide (PA612) and the polyhydroxyl polymer. A polyhydroxy polymer concentration of 13 wt% is below the minimum concentration of polyhydroxyl polymer needed to improve the elongation at break of the thermoplastic composition to at least 300 percent greater than the elongation at break of the same thermoplastic composition in the absence of the polyhydroxyl polymer.

**Table 2**

| Example | C6 | C7 | C8 | C9 | C10 | C11 | C12 | C13 | C14 | E3 |
|---|---|---|---|---|---|---|---|---|---|---|
| PA610/8T | | | | | 76.7 | 66.5 | 56.5 | | | |
| PA612 | | | | | | | | 76.7 | 66.5 | 56.5 |
| PA1010 | 76.7 | 66.5 | 61.5 | 56.5 | | | | | | |
| EVAL E 105B | | 10 | 15 | 20 | | 10 | 2 | | 10 | 20 |
| Surlyn 9320 | 16 | 16 | 16 | 16 | 16 | 16 | 16 | 16 | 16 | 16 |
| Elvaloy EP4934-4 | 4 | 4 | 4 | 4 | 4 | 4 | 4 | 4 | 4 | 4 |
| COLLOIDS PE48/93 | 2 | 2 | 2 | 2 | 2 | 2 | 2 | 2 | 2 | 2 |
| Other Ingredients | 0.9 | 1.1 | 1.1 | 1.1 | 0.9 | 1.1 | 1.3 | 0.9 | 1.1 | 1.1 |
| HS 7:1:3.75 | 0.4 | 0.4 | 0.4 | 0.4 | 0.4 | 0.4 | 0.4 | 0.4 | 0.4 | 0.4 |

| **Physical Properties** | | | | | | | | | | |
|---|---|---|---|---|---|---|---|---|---|---|
| EI (%) 0 h | 150 | 183 | 170 | 183 | 243 | 244 | 279 | 243 | 248 | 271 |
| EI (%) 500 h | 61 | 72 | 67 | 71 | 101 | 83 | 62 | 59 | 95 | 100 |
| EI (%) 1000 h | 52 | 66 | 67 | 65 | 8 | 13 | 13 | 12 | 21 | 56 |
| Improvement EI over Control at 1000 hrs. (%) | N/A | 27 | 29 | 25 | N/A | 63 | 63 | N/A | 75 | 467 |
| EvOH wt/EVOH + Polyamide wt X 100 % | N/A | 13 | 20 | 26 | N/A | 13 | 26 | N/A | 13 | 26 |

### Example E4 and C15 - C17

Thermoplastic compositions of Example E4 and Comparative Examples C15 -C17 are listed in Table 3. These compositions are blends of PA612/6T or PA612 and PA612/6T with an alpha olefin copolymer and a grafted olefin polymer. Included in other ingredients listed in Table 3 are antioxidants, nucleating agents, and color concentrates. Typical examples of antioxidants include Akrochem and Irgafos antioxidants. Typical examples of nucleating agents induce talc and boron nitride. The specific antioxidant, nucleating agent, or color concentrate can be easily chosen by one of skill in the art.

The thermoplastic composition of E4 is similar to C15 except that C15 does not comprise polyhydroxy polymer. E4 has an improvement in elongation at break of 312 percent compared to a similar composition (C15) which does not comprise a polyhydroxy polymer.

C16 comprises a weight ratio of 30 weight percent of EvOH to 70 weight percent PA612/6T. After 1024 hours exposure to heated 50/50 water/ethylene glycol mixture B, there was no improvement in elongation at break relative to C17 which contained no EvOH. This result shows that if the concentration of EvOH is about 30 weight percent, elongation at break performance deteriorates.

**Table 3**

| Example | E4 | C15 | C16 | C17 |
|---|---|---|---|---|
| PA612/6T | 38.5 | 40 | 40 | 70.9 |
| PA612 | 16.5 | 17.1 | 0 | 0 |
| EVAL F171 | 6.1 | 0 | 17.1 | 0 |
| ENGAGE 8180 | 18 | 19 | 19 | 12.5 |
| Naugard 445 | 0.5 | 0.5 | 0.5 | 0.5 |
| HS 7:1:1 | 0.4 | 0.4 | 0.4 | 0.4 |
| Fusabond N493 | 17 | 20 | 20 | 12.5 |
| Other Ingredients | 3.0 | 3.0 | 3.,0 | 3.2 |

| **Physical Properties** | | | | |
|---|---|---|---|---|
| Strain at Break (%) 0 hrs. | 189 | 184 | 142 | 198 |
| Strain at Break (%)/(hrs) | 135/500 | 84 / 500 | 88 / 500 | 44 / 596 |
| Strain at Break (%)/(hers) | 112 / 040 | 35 / 1024 | 35 / 1024 | 36 / 1075 |
| % Improvement over Control at 1500 Hrs. | 312 | N/A | N/A | N/A |
| EVOH wt/EVOH + Polyamide wt X100 % | 10 | N/A | 30 | N/A |

## Claims

1. A thermoplastic composition comprising:
A) 65 to 85 weight percent of an aliphatic polyamide selected from poly(hexamethylene dodecanediamide), poly(hexamethylene tetradecanediamide), poly(hexamethylene hexadecanediamide), or any combination thereof;
B) 15 to 35 weight percent of a polyhydroxy polymer selected from ethylene/vinyl alcohol copolymer, poly(vinyl alcohol), or a combination thereof, said polyhydroxy polymer having a melt index of from 0.5 to 30 gms/10 min;
wherein the elongation at break of the thermoplastic composition after exposure to a 50/50 water/ethylene glycol mixture at 130°C for 1000 hrs. is at least 300 percent greater than the elongation at break of the same thermoplastic composition in the absence of component (B); and
wherein weight percent is based on the sum of component (A) and (B).

2. The thermoplastic composition of claim 1 wherein the aliphatic polyamide is poly(hexamethylene dodecanediamide).

3. The thermoplastic composition of claim 1 wherein the polyhydroxy polymer is present from 18 to 35 weight percent.

4. The thermoplastic composition of claim 1 wherein no reinforcement agent is present.

5. A thermoplastic composition comprising a blend of:
A) 75 to 95 weight percent of a mixture of :
i) greater than 0 to 50 weight percent of an aliphatic polyamide selected from poly(hexamethylene dodecanediamide), poly(hexamethylene tetradecanediamide), poly(hexamethylene hexadecanediamide), or any combination thereof; and
ii) 50 to 100 weight percent of a semi-aromatic copolyamide selected from poly(hexamethylene dodecanediamide/hexamethylene terephthalamide), poly(hexamethylene tetradecanediamide/hexamethylene terephthalamide), poly(hexamethylene hexadecanediamide/hexamethylene terephthalamide), or any combination thereof;
wherein the semi-aromatic copolyamide has a molar ratio of aliphatic repeat unit:semi-aromatic repeat unit of from 50:50 to 80:20; and
B) 5 to 25 weight percent of a polyhydroxy polymer selected from ethylene/vinyl alcohol copolymer, poly(vinyl alcohol), or a combination thereof, said polyhydroxy polymer having having a MI of from 0.5 to 30 gms/10 min;
wherein the elongation at break of the thermoplastic composition after exposure to a 50/50 water/ethylene glycol mixture at 130C for 1000 hrs. is at least 300 percent greater than the elongation at break of the same thermoplastic composition in the absence of component (B); and
wherein weight percent is based on the sum of component (A) and (B).

6. A thermoplastic composition comprising a blend of:
A) 75 to 95 weight percent of a semi-aromatic copolyamide selected from poly(hexamethylene dodecanediamide/hexamethylene terephthalamide), poly(hexamethylene tetradecanediamide/hexamethylene terephthalamide), poly(hexamethylene hexadecanediamide/hexamethylene terephthalamide), or any combination thereof;
wherein the semi-aromatic copolyamide has a molar ratio of aliphatic repeat unit:semi-aromatic repeat unit of from 50:50 to 80:20; and
B) 5 to 25 weight percent of a polyhydroxy polymer selected from ethylene/vinyl alcohol copolymer, poly(vinyl alcohol), or a combination thereof, said polyhydroxy polymer having having a MI of from 0.5 to 30 gms/10 min;
wherein the elongation at break of the thermoplastic composition after exposure to a 50/50 water/ethylene glycol mixture at 130C for 1000 hrs. is at least 300 percent greater than the elongation at break of the same thermoplastic composition in the absence of component (B); and
wherein weight percent is based on the sum of component (A) and (B).

7. The thermoplastic composition of any one of claims 1, 5, or 6 wherein the polyhydroxy polymer is ethylene/vinyl alcohol copolymer having a hydroxyl content of 10 to 90 mol percent.

8. The thermoplastic composition of claim 5 or 6 wherein the polyhydroxy polymer is present from 5 to 20 weight percent.

9. The thermoplastic composition of claim 1 additionally comprising from greater than zero to 25 weight percent of one or more polymers selected from ionomeric polymers, acid grafted ethylene polymers, anhydride grafted ethylene polymers, alpha olefin homopolymers, alpha olefin copolymers, or any combination thereof.

10. A hose, pipe, or tube comprising the thermoplastic composition of any one of claims 1, 5 or 6.

## Patentansprüche

1. Thermoplastische Zusammensetzung umfassend:
A) 65 bis 85 Gewichtsprozent eines aliphatischen Polyamids ausgewählt unter Poly(hexamethylendodecandiamid), Poly(hexamethylentetradecandiamid), Poly(hexamethylenhexadecandiamid) oder irgendeiner Kombination davon;
B) 15 bis 35 Gewichtsprozent eines Polyhydroxypolymers ausgewählt unter Ethylen-Vinylalkohol-Copolymer, Poly(vinylalkohol) oder einer Kombination davon, wobei das Polyhydroxypolymer einen Schmelzindex von 0,5 bis 30 g/10 min aufweist;
wobei die Bruchdehnung der thermoplastischen Zusammensetzung nach Aussetzen einer Mischung von Wasser/Ethylenglykol von 50/50 bei 130 °C 1000 h lang gegenüber mindestens 300 Prozent höher als die Bruchdehnung derselben thermoplastischen Zusammensetzung in Abwesenheit der Komponente (B) liegt; und
wobei der Gewichtsprozentsatz auf der Summe der Komponente (A) und (B) beruht.

2. Thermoplastische Zusammensetzung nach Anspruch 1, wobei das aliphatische Polyamid Poly(hexamethylendodecandiamid) ist.

3. Thermoplastische Zusammensetzung nach Anspruch 1, wobei das Polyhydroxypolymer in einer Menge von 18 bis 35 Gewichtsprozent vorliegt.

4. Thermoplastische Zusammensetzung nach Anspruch 1, wobei kein Verstärkungsmittel vorliegt.

5. Thermoplastische Zusammensetzung umfassend eine Abmischung von:
A) 75 bis 95 Gewichtsprozent einer Mischung von:
i) mehr als 0 bis 50 Gewichtsprozent eines aliphatischen Polyamids ausgewählt unter Poly(hexamethylendodecandiamid), Poly(hexamethylentetradecandiamid), Poly(hexamethylenhexadecandiamid) oder irgendeiner Kombination davon; und
ii) 50 bis 100 Gewichtsprozent eines halbaromatischen Copolyamids ausgewählt unter Poly(hexamethylendodecandiamid/Hexamethylenterephthalamid), Poly(hexamethylentetradecandiamid/Hexamethylenterephthalamid), Poly(hexamethylenhexadecandiamid/Hexamethylenterephthalamid) oder irgendeiner Kombination davon;
wobei das halbaromatische Copolyamid ein Molverhältnis von aliphatischer Wiederholungseinheit: halbaromatischer Wiederholungseinheit von 50:50 bis 80:20 aufweist; und
B) 5 bis 25 Gewichtsprozent eines Polyhydroxypolymers ausgewählt unter Ethylen-Vinylalkohol-Copolymer, Poly(vinylalkohol) oder einer Kombination davon, wobei das Polyhydroxypolymer einen MI von 0,5 bis 30 g/10 min aufweist;
wobei die Bruchdehnung der thermoplastischen Zusammensetzung nach Aussetzen einer Mischung von Wasser/Ethylenglykol von 50/50 bei 130 °C 1000 h lang gegenüber mindestens 300 Prozent höher als die Bruchdehnung derselben thermoplastischen Zusammensetzung in Abwesenheit der Komponente (B) liegt; und
wobei der Gewichtsprozentsatz auf der Summe der Komponente (A) und (B) beruht.

6. Thermoplastische Zusammensetzung umfassend eine Abmischung von
A) 75 bis 95 Gewichtsprozent eines halbaromatischen Copolyamids ausgewählt unter Poly(hexamethylendodecandiamid/Hexamethylenterephthalamid), Poly(hexamethylentetradecandiamid/Hexamethylenterephthalamid), Poly(hexamethylenhexadecandiamid/Hexamethylenterephthalamid), oder irgendeiner Kombination davon;
wobei das halbaromatische Copolyamid ein Molverhältnis von aliphatischer Wiederholungseinheit : halbaromatischer Wiederholungseinheit von 50:50 bis 80:20 aufweist; und
B) 5 bis 25 Gewichtsprozent eines Polyhydroxypolymers ausgewählt unter Ethylen-Vinylalkohol-Copolymer, Poly(vinylalkohol) oder einer Kombination davon, wobei das Polyhydroxypolymer einen MI von 0,5 bis 30 g/10 min aufweist;
wobei die Bruchdehnung der thermoplastischen Zusammensetzung nach Aussetzen einer Mischung von Wasser/Ethylenglykol von 50/50 bei 130 °C 1000 h lang gegenüber mindestens 300 Prozent höher als die Bruchdehnung derselben thermoplastischen Zusammensetzung in Abwesenheit der Komponente (B) liegt; und wobei der Gewichtsprozentsatz auf der Summe der Komponente (A) und (B) beruht.

7. Thermoplastische Zusammensetzung nach irgendeinem der Ansprüche 1, 5 oder 6, wobei das Polyhydroxypolymer Ethylen-Vinylalkohol-Copolymer ist, das einen Hydroxylgehalt von 10 bis 90 Molprozent aufweist.

8. Thermoplastische Zusammensetzung nach Anspruch 5 oder 6, wobei das Polyhydroxypolymer in einer Menge von 5 bis 20 Gewichtsprozent vorliegt.

9. Thermoplastische Zusammensetzung nach Anspruch 1, die zusätzlich mehr als null bis 25 Gewichtsprozent eines oder mehrerer Polymere umfasst ausgewählt unter ionomeren Polymeren, säuregepfropften Ethylenpolymeren, anhydridgepfropften Ethylenpolymeren, Alpha-Olefin-Homopolymeren, Alpha-Olefin-Copolymeren oder irgend einer Kombination davon.

10. Schlauch, Röhre oder Rohr umfassend die thermoplastische Zusammensetzung nach irgendeinem der Ansprüche 1, 5 oder 6.

## Revendications

1. Composition thermoplastique comprenant:
A) de 65 à 85 pour cent en poids d'un polyamide aliphatique sélectionné parmi le poly(dodécanediamide d'hexaméthylène), le poly(tétradécanediamide d'hexaméthylène), le poly(hexadécanediamide d'hexaméthylène), ou n'importe quelle combinaison de ceux-ci;
B) de 15 à 35 pour cent en poids d'un polymère polyhydroxy sélectionné parmi le copolymère d'éthylène/alcool de vinyle, le poly(alcool de vinyle), ou une combinaison de ceux-ci, ledit polymère polyhydroxy ayant un indice de fusion de 0,5 à 30 gms/10 min;
où l'allongement à la rupture de la composition thermoplastique après exposition à un mélange 50/50 d'eau/éthylène glycol à 130°C durant 1 000 h est au moins 300 pour cent supérieur à l'allongement à la rupture de la même composition thermoplastique en l'absence du composant (B); et
où le pourcentage en poids est basé sur la somme du composant (A) et (B).

2. Composition thermoplastique selon la revendication 1 dans laquelle le polyamide aliphatique est le poly(dodécanediamide d'hexaméthylène).

3. Composition thermoplastique selon la revendication 1 dans laquelle le polymère polyhydroxy est présent à partir de 18 à 35 pour cent en poids.

4. Composition thermoplastique selon la revendication 1 dans laquelle aucun agent de renfort n'est présent.

5. Composition thermoplastique comprenant un mélange de:
A) 75 à 95 pour cent en poids d'un mélange de:
i) plus de 0 à 50 pour cent en poids d'un polyamide aliphatique sélectionné parmi le poly(dodécanediamide d'hexaméthylène), le poly(tétradécanediamide d'hexaméthylène), le poly(hexadécanediamide d'hexaméthylène), ou n'importe quelle combinaison de ceux-ci; et
ii) de 50 à 100 pour cent en poids d'un copolyamide semi-aromatique sélectionné parmi le poly(dodécanediamide d'hexaméthylène/téréphtalamide d'hexaméthylène), le poly(tétradécanediamide d'hexaméthylène/téréphtalamide d'hexaméthylène), le poly(hexadécanediamide d'hexaméthylène/téréphtalamide d'hexaméthylène), ou n'importe quelle combinaison de ceux-ci;
où le copolyamide semi-aromatique présente un rapport molaire du motif de répétition aliphatique:motif de répétition semi-aromatique de 50:50 à 80:20; et
B) 5 à 25 pour cent en poids d'un polymère polyhydroxy sélectionné parmi le copolymère d'éthylène/alcool de vinyle, le poly(alcool de vinyle), ou une combinaison de ceux-ci, ledit polymère polyhydroxy ayant un MI de 0,5 à 30 gms/10 min;
où l'allongement à la rupture de la composition thermoplastique après exposition à un mélange 50/50 d'eau/éthylène glycol à 130°C durant 1 000 h est au moins 300 pour cent supérieur à l'allongement à la rupture de la même composition thermoplastique en l'absence du composant (B); et
où le pourcentage en poids est basé sur la somme du composant (A) et (B).

6. Composition thermoplastique comprenant un mélange de:
A) 75 à 95 pour cent en poids d'un copolyamide semi-aromatique sélectionné parmi le poly(dodécanediamide d'hexaméthylène/téréphtalamide d'hexaméthylène), le poly(tétradécanediamide d'hexaméthylène/téréphtalamide d'hexaméthylène), le poly(hexadécanediamide d'hexaméthylène/téréphtalamide d'hexaméthylène), ou n'importe quelle combinaison de ceux-ci;
où le copolyamide semi-aromatique présente un rapport molaire du motif de répétition aliphatique:motif de répétition semi-aromatique de 50:50 à 80:20; et
B) 5 à 25 pour cent en poids d'un polymère polyhydroxy sélectionné parmi le copolymère d'éthylène/alcool de vinyle, le poly(alcool de vinyle), ou une combinaison de ceux-ci, ledit polymère polyhydroxy ayant un MI de 0,5 à 30 gms/10 min;
où l'allongement à la rupture de la composition thermoplastique après exposition à un mélange 50/50 d'eau/éthylène glycol à 130°C durant 1 000 h est au moins 300 pour cent supérieur à l'allongement à la rupture de la même composition thermoplastique en l'absence du composant (B); et
où le pourcentage en poids est basé sur la somme du composant (A) et (B).

7. Composition thermoplastique selon l'une quelconque des revendications 1, 5, ou 6 dans laquelle le polymère polyhydroxy est le copolymère d'éthylène/alcool de vinyle ayant une teneur en groupes hydroxyle de 10 à 90 pour cent en mole.

8. Composition thermoplastique selon la revendication 5 ou 6 dans laquelle le polymère polyhydroxy est présent à partir de 5 à 20 pour cent en poids.

9. Composition thermoplastique selon la revendication 1 comprenant de manière supplémentaire plus de zéro à 25 pour cent en poids d'un ou plusieurs polymères sélectionnés parmi les polymères ionomères, les polymères d'éthylène greffés avec un acide, les polymères d'éthylène greffés avec un anhydride, les homopolymères d'alpha oléfine, les copolymères d'alpha oléfine, ou n'importe quelle combinaison de ceux-ci.

10. Tuyau, conduite, ou tube comprenant la composition thermoplastique selon l'une quelconque des revendications 1, 5 ou 6.
